# EUROPÄISCHE PATENTSCHRIFT

(11) **EP 1 650 061 B1**
(45) Veröffentlichungstag und Bekanntmachung des Hinweises auf die Patenterteilung: **19.05.2010**
(21) Anmeldenummer: 05022733.9
(22) Anmeldetag: 19.10.2005
(51) Int. Cl.: B60G 17/015

(54) **Verfahren zur Veränderung eines Niveaus eines Nutzfahrzeuges mit Luftfederungsanlage**
Method for changing the level of a utility vehicle with pneumatic suspension system
Méthode pour changer le niveau d'un véhicule utilitaire avec système de suspension pneumatique

(30) Priorität: 23.10.2004 DE 102004051740
(43) Veröffentlichungstag der Anmeldung: 26.04.2006
(73) Patentinhaber: Haldex Brake Products GmbH, 69123 Heidelberg (DE)
(72) Erfinder: Heer, Siegfried, 69168 Wiesloch (DE)
(74) Vertreter: Rehberg Hüppe + Partner

(56) Entgegenhaltungen:
- EP-A- 1 380 454
- DE-A1- 4 333 823
- DE-A1- 19 640 149
- JP-A- 1 056 218
- JP-A- 60 078 804
- US-A- 4 965 878

## Beschreibung

Die Erfindung betrifft ein Verfahren zur Veränderung eines Niveaus eines Nutzfahrzeuges mit Luftfederungsanlage gemäß dem Oberbegriff des Anspruchs 1.

### HINTERGRUND DER ERFINDUNG

Aus der DE 101 60 972 C1 ist ein geschlossenes Niveauregulierungssystem bekannt, bei welchem für eine Niveauänderung eine Luftmasse in Folge eines vorliegenden Druckgefälles oder mittels einer Pumpe von einem Vorratsbehälter zu einem Federbalg bewegt wird oder umgekehrt. Im Vorfeld einer derartigen Niveauänderung wird hierbei eine Umgebungstemperatur des Fahrzeuges gemessen. Aus den Luftdrücken in einzelnen Komponenten der Luftfederungsanlage, einem aktuellen Fahrzeugniveau und der gemessenen Umgebungstemperatur wird eine Ist-Luftmasse in dem geschlossenen Niveauregulierungssystem berechnet. Weiterhin werden aus dem Fahrzeugniveau, der Umgebungstemperatur und der aus diesem Fahrzeugniveau heraus maximalen möglichen Niveauänderung eine fahrzeugspezifische Soll-Luftmasse und ein Soll-Luftdruck berechnet. Unterschreitet der Ist-Luftdruck den Soll-Luftdruck, so ist eine Erhöhung der Ist-Luftmasse im Niveauregulierungssystem notwendig, während die Ist-Luftmasse im Niveauregulierungssystem verringert wird, wenn der Ist-Luftdruck den Soll-Luftdruck überschreitet. Hierdurch wird der Luftdruck oder eine Luftmasse in der Luftfederungsanlage auch bei Temperaturänderung so angepasst, dass der Luftdruck und die Luftmenge immer ausreichend sind, um eine maximal mögliche Niveauänderung herbeizuführen. Eine Veränderung der Luftmenge bzw. des Luftdruckes erfolgt hier durch einen pneumatischen Austausch der Luftfederungsanlage mit der Umgebung, und zwar durch eine Erhöhung der Luftmenge über eine Pumpe oder ein Entlüften der Luftfederungsanlage. Dieser Stand der Technik beruht damit auf dem Ansatz, auch bei Temperaturänderungen in der Luftfederungsanlage die pneumatischen Bedingungen in der Luftfederungsanlage konstant oder vergleichbar zu halten, um ein möglichst gleiches Niveauänderungsverhalten herbeizuführen.

Aus der EP 1 375 207 A2 ist ein Verfahren bekannt, bei welchem für eine Veränderung der Verteilung der Achslasten das Niveau mindestens einer Fahrzeugachse verändert wird. Dieses Verfahren dient einer Gewährleistung einer Mindestachslast für eine lenkbare Vorderachse. Mit einer Veränderung des Niveaus einer hinteren Fahrzeugachse kann die Achslast der lenkbaren Vorderachse beeinflusst werden. Hierbei wird die Vorderachslast während einer Veränderung des Niveaus gemessen und es wird geprüft, ob die gemessene Achslast der lenkbaren Vorderachse kleiner oder gleich einer vorgebbaren Mindestlast ist. Solange das vorgenannte Kriterium erfüllt ist, wird die Veränderung des Niveaus fortgesetzt, bis die Mindestachslast erreicht ist. Einem derartigen Verfahren liegt daher eine Regelung unter Rückführung eines aktuellen Wertes einer Achslast zugrunde.

Aus der DE 43 33 823 A1 ist das Problem bekannt, bei einem Nutzfahrzeug ein Ist-Niveau auf ein neues Soll-Niveau anzuheben. Für eine schnelle Verstellung werden große Ventilquerschnitte verwendet, wodurch aber die Genauigkeit des erzielten Soll-Niveaus schwer einstellbar ist. Als weiteres Problem wird genannt, dass sich die Luft stark elastisch verhält, weshalb ein Schließen eines Ventils die Niveauveränderung nicht sofort beendet, sondern ein Nachverstellen erfolgt. Zur Vermeidung dieser Probleme erwähnt die DE 43 33 823 A1 zunächst bekannte Verfahren, bei denen zunächst ein Niveau zwischen dem Ist-Niveau und dem Soll-Niveau angesteuert wird und anschließend schrittweise mit kurzen Öffnungstakten das genaue Soll-Niveau angefahren werden soll. Gemäß der Offenbarung der DE 43 33 823 A1 wird alternativ vorgeschlagen, dass ein Schließen des für die Niveauänderung verantwortlichen Ventils nicht erst erfolgt, wenn ein Soll-Niveau erreicht ist. Vielmehr wird eine so genannte Vorhalte-Niveaudifferenz bestimmt, die wiederum aus einer während der Verstellung gemessenen Verstellgeschwindigkeit ermittelt wird. Mit fortwährender Niveauänderung wird dann das Ist-Niveau ständig erfasst und überprüft, ob das Ist-Niveau bereits das die Vorhalte-Niveaudifferenz beinhaltende Abschaltniveau erreicht hat. Sobald dieses der Fall ist, wird das Ventil geschlossen, wobei davon ausgegangen wird, dass sich anschließend trotz des Schließens des Ventils eine weitere, nachträgliche Niveauänderung in dem Ausmaß der Vorhalte-Niveaudifferenz ergibt. Für den Fall, dass sich nach einem derartigen vorzeitigen Abschalten nicht das erwünschte Soll-Niveau ergibt, erfolgt eine Adaption der Vorhalte-Niveaudifferenz, die dann für zukünftige Niveauänderungen verwendet wird. Eine Besonderheit ergibt sich für den Fall, dass die Differenz zwischen dem Ist-Niveau und dem Soll-Niveau unter einem kritischen Wert liegt, so dass der Zeitraum einer Niveauänderung u. U. zu kurz ist, um eine Verstellgeschwindigkeit des Niveaus zu messen. Ausschließlich in diesem Fall wird eine Öffnungszeitspanne aus einem vorbekannten Zusammenhang zwischen der Differenz aus dem Ist-Niveau und dem Soll-Niveau und der Öffnungszeitspanne eines eingesetzten Ventils entsprechend a priori vorgegebener Kenngrößen ermittelt. Eine Berücksichtigung unterschiedlicher Niveauänderungen durch unterschiedliche Beladungszustände des Nutzfahrzeugs berücksichtigt das aus DE 43 33 823 A1 bekannte Verfahren beispielsweise dadurch, dass der zuvor erwähnte kritische Wert der Differenz zwischen dem Ist-Niveau und dem Soll-Niveau, für die eine Messung der Verstellgeschwindigkeit gerade noch erfolgen soll, von dem Beladungszustand abhängig gemacht werden soll.

Weiterhin ist aus DE 196 40 149 A1 eine ständige Überwachung des Ist-Werts des Fahrzeugniveaus während einer Niveauänderung bekannt. In einer u. U. adaptierten linearen Abhängigkeit wird ein so genannter Nachlauf-Weg abgelegt in Abhängigkeit von einer gemessenen Verstellgeschwindigkeit. Der Nachlauf-Weg entspricht damit im Wesentlichen der Vorhalte-Niveaudifferenz gemäß DE 43 33 823 A1. Für den Fall, dass der Ist-Wert des Fahrzeugniveaus dem Soll-Wert des Fahrzeugniveaus vermindert um den Nachlauf-Weg entspricht, wird das für die Niveauänderung verantwortliche Ventil geschlossen.

Schließlich offenbart die gattungsbildende Druckschrift EP 1 380 454 A1 eine Luftfederungsanlage mit einer Niveauregelung, bei der der Luftfederbalg über ein elektrisch steuerbares 3/2-Wegeventil je nach Beladungszustand und Niveau alternativ mit der Atmosphäre oder einem Druckluftbehälter verbindbar ist. Mittels einer Steuereinrichtung wird für eine Beladung des Fahrzeuges ein Maß für die zugeführte Ladung, d.h. die Beladungsänderung bestimmt. De Beladungsänderung kann hierbei durch Auswertung des zeitlichen Gradienten des Ist-Fahrzeugniveaus ermittelt werden. Anschließend wird mittels einer durch Versuche gewonnenen Tabellenfunktion aus der Ladung einer erforderliche Belüftungsdauer für den Federbalg bestimmt.

Weiterer Stand der Technik ist aus JP 01056218 A, JP 60078804 A, US-A-4 965 878, DE 43 33 823 A und DE 196 40 149 A bekannt.

### AUFGABE DER ERFINDUNG

Der vorliegenden Erfindung liegt die Aufgabe zugrunde, ein verbessertes Verfahren zur Veränderung eines Niveaus eines Nutzfahrzeuges mit Luftfederungsanlage vorzuschlagen, welches den Betriebsbedingungen der Luftfederungsanlage und/oder den Betriebsbedingungen des Nutzfahrzeuges Rechnung trägt.

### LÖSUNG

Die Aufgabe der Erfindung wird erfindungsgemäß mit den Merkmalen des unabhängigen Patentanspruchs 1 gelöst.

### BESCHREIBUNG DER ERFINDUNG

Bei dem erfindungsgemäßen Verfahren handelt es sich um ein solches zur Veränderung eines Niveaus eines Nutzfahrzeuges mit Luftfederungsanlage von einem Ist-Niveau auf ein Soll-Niveau.

Eine derartige Veränderung kann nach Maßgabe eines Fahrers, beispielsweise durch manuelle Aktivierung oder Anforderung einer Veränderung des Niveaus, erfolgen. Alternativ ist eine automatisch von einer Steuereinheit angeforderte Veränderung des Niveaus möglich, beispielsweise in Folge einer Veränderung einer Beladung des Nutzfahrzeuges. Ebenfalls möglich ist eine Anpassung des Niveaus des Nutzfahrzeuges in Folge einer Veränderung der Straßenverhältnisse oder in Folge einer Veränderung der dynamischen Beaufschlagungen der Luftfederungsanlage im Betrieb des Kraftfahrzeuges. Weiterhin kann das Verfahren eingesetzt werden, wenn das Nutzfahrzeug auf einem konstanten Niveau gehalten werden soll, sich dennoch eine Niveauänderung ergibt und über das erfindungsgemäße Verfahren eine Rückführung des Niveaus des Nutzfahrzeuges auf das Soll-Niveau erfolgen soll. Schließlich kann die Ursache einer Veränderung des Niveaus auch eine automatische oder manuelle Anforderung einer Veränderung einer Achslastverteilung sein, beispielsweise für eine Veränderung der Achslastverteilung zwischen einer Antriebsachse und einer Zusatzachse oder Liftachse oder entsprechend EP 1 375 207 A2.

Erfindungsgemäß wird der pneumatische Zustand eines das Niveau des Nutzfahrzeuges beeinflussenden Federbalges dadurch verändert, dass der Federbalg über ein Schaltventil in Öffnungsstellung mit einem zweiten Druckniveau verbunden wird, welches von dem Druckniveau des Federbalges abweicht.

Bei diesem abweichenden Druckniveau kann es sich um ein Druckniveau handeln, welches mit dem Druck in einem Vorratsbehälter korreliert und welches damit insbesondere größer ist als der Druck in dem Federbalg. Durch die Überführung des Schaltventils in die Öffnungsstellung wird in diesem Fall mit zunehmender Zeit der Druck in dem Federbalg erhöht, wodurch das Ist-Niveau des Nutzfahrzeuges angehoben werden kann. Alternativ kann das abweichende Druckniveau mit einem Umgebungsdruck korrelieren, welches somit unterhalb des Druckniveaus des Federbalges liegt, wodurch eine Entlüftung des Federbalges in der Öffnungsstellung des Schaltventils herbeigeführt wird.

Der Erfindung liegt die Erkenntnis zugrunde, dass in der Öffnungsstellung des Schaltventils dieses zu einem definierten zukünftigen Zeitpunkt in die Sperrstellung überführt werden muss, damit das Soll-Niveau des Nutzfahrzeuges exakt erreicht werden kann. Erfolgt eine Überführung des Schaltventils in die Sperrstellung zu einem anderen Zeitpunkt, wird das Fahrzeug nicht (genau) auf das Soll-Niveau gebracht. Hierbei ist allerdings festzustellen, dass die notwendige Öffnungsdauer u. U. auch für gleiche Niveauänderungen unterschiedlich sein kann.

Erfindungsgemäß wird daher ein "Prädiktorverfahren" für eine Ermittlung des zukünftigen Zeitpunktes ausgeführt: In einer Steuereinheit wird der zukünftige Zeitpunkt ermittelt, zu dem voraussichtlich das Schaltventil in eine Sperrstellung zu überführen ist. Hierbei spielen mehrere Einflussfaktoren eine Rolle, welche erfindungsgemäß berücksichtigt werden, wodurch die Genauigkeit der Vorhersage des zukünftigen Zeitpunktes erhöht werden kann:
- Als einen maßgeblichen Einflussparameter für den zukünftigen Zeitpunkt und damit die notwendige Öffnungsdauer für das Schaltventil hat die Erfindung den Sollwert der Änderung des Niveaus erkannt, da sich gezeigt hat, dass für größere Änderung des Niveaus eine längere Öffnungsstellung des Schaltventils erforderlich ist, damit eine für eine größere Änderung des Niveaus notwendige Luftmenge bewegt werden kann.
- Des Weiteren wird erfindungsgemäß ein (Be-)Ladungszustand des Nutzfahrzeuges durch einen mit diesem korrelierenden Ladungswert berücksichtigt. Hierbei hat sich gezeigt, dass mit zunehmender Beladung eine längere Öffnungsstellung erforderlich ist, um eine Anhebung des Niveaus des Nutzfahrzeuges herbeizuführen, da in diesem Fall eine Luftbewegung unter einem Anheben der Beladung des Nutzfahrzeuges erfolgen muss. Andererseits erfolgt üblicherweise mit einer Vergrößerung der Beladung eine Entlüftung des Federbalges schneller, da das Gewicht der Ladung die Luftbewegung unterstützt.
- Als weiteren dritten Einflussparameter berücksichtigt entsprechend der vorliegenden Erfindung die Steuereinrichtung einen Druckwert, der mit einem zweiten Druckniveau korreliert. Im Fall einer Niveaureduzierung, also einer Entlüftung des Federbalges, korreliert der Druckwert beispielsweise mit dem Umgebungsdruck, der aber auch in erster Näherung als konstant vorausgesetzt werden kann. Im Fall einer Erhöhung des Niveaus korreliert der Druckwert hingegen mit einem Druck im Vorratsbehälter. Der Druckwert beeinflusst unmittelbar das Druckgefälle und damit die Schnelligkeit einer Anpassung der Druckverhältnisse bei geöffnetem Schaltventil, was wiederum den erforderlichen Zeitpunkt für ein Überführen des Schaltventils in die Sperrstellung beeinflusst. Dieser Druck kann weiterhin in Beziehung mit einem Volumen des Vorratsbehälters gesetzt werden. Über den Druck und das Volumen kann ein "Energievorrat" oder ein "Druckausgleichspotential" ermittelt werden, von dem die Schnelligkeit einer Niveauänderung abhängig ist.

Die vorgenannten Einflussparameter können unmittelbar erfasst und der Steuereinheit zugeführt werden oder aber mittelbar erfasst werden. Hinsichtlich des Sollwertes für die Änderung des Niveaus kann eine Differenz zwischen dem Ist-Niveau und dem Soll-Niveau ermittelt und der Steuereinheit zugeführt werden. Besonders vorteilhaft ist es hierbei aber, wenn sowohl das Ist-Niveau als auch das Soll-Niveau (oder die gewünschte Änderung) in der Steuereinheit berücksichtigt werden. Ein Ladungswert kann beispielsweise über eine Einfederung während des Beladens des Nutzfahrzeuges oder beispielsweise über ein Beschleunigungsverhalten während Beschleunigungsvorgängen oder Bremsvorgängen ermittelt werden. Alternativ kann der Ladungswert über den Druck in dem Federbalg ermittelt werden. Der Druckwert kann im Falle einer erforderlichen Anhebung des Niveaus unmittelbar in dem Vorratsbehälter erfasst werden oder in einer der Leitungen oder Aggregate, die mit dem Vorratsbehälter verbunden sind, wobei unter Umständen ein geeigneter Korrekturfaktor für Leitungsdruckverluste o. ä. berücksichtigt werden muss.

Neben dem Sollwert der Änderung des Niveaus, dem Ladungswert und dem mit dem zweiten Druckniveau korrelierenden Druckwert kann der zukünftige Zeitpunkt auch unter Verwendung zusätzlicher Parameter, Betriebswerte, Umgebungswerte und Messwerte ermittelt werden.

Eine Kenntnis des zukünftigen Zeitpunktes, für welchen ein Erreichen des Soll-Niveaus zu erwarten ist, ermöglicht eine rechtzeitige Einleitung erforderlicher Maßnahmen wie beispielsweise eine rechtzeitige Ansteuerung des Schaltventils zur Herbeiführung der Sperrstellung, wodurch einem zeitverzögerten Ansprechverhalten Rechnung getragen werden kann.

Weiterhin kann eine Veränderung des Niveaus des Nutzfahrzeuges von einer schwingenden Bewegung des Nutzfahrzeuges überlagert werden, so dass eine Herbeiführung der Sperrstellung des Schaltventils nach Maßgabe einer Regelung unter Verwendung des messtechnisch erfassten Niveaus des Nutzfahrzeuges während der Öffnungsstellung fehlerbehaftet sein kann. Auch in diesem Fall ist die erfindungsgemäße Ausgestaltung von Vorteil, da das "Prädiktorverfahren" unabhängig von den genannten Schwingungen ist. Ebenfalls kann erfindungsgemäß auf eine aufwändige Steuerung oder Regelung verzichtet werden, wobei aber auch der Einsatz einer ergänzenden Steuerung oder Regelung denkbar ist.

Die Erfindung ist auch dann besonders vorteilhaft einsetzbar, wenn eine Niveauänderung verhältnismäßig schnell erfolgt - sei es durch eine geringfügig gewünschte Änderung des Niveaus, also einen kleinen Sollwert, einen sehr niedrigen Beladungszustand des Nutzfahrzeugs und/oder eine große Druckdifferenz zwischen dem zweiten Druckniveau und dem Druckniveau des Federbalges. In einem derartigen Fall ist eine Regelung oder Steuerung unter Umständen nicht möglich oder nur mit einem großen Aufwand möglich, da diese schnell sein muss und gleichzeitig dynamische Effekte außer Acht lassen sollte. Erfindungsgemäß ist a priori der Zeitpunkt für eine Herbeiführung der Schließstellung des Schaltventils bekannt. In der Steuereinheit können die vorgenannten Einflussparameter über eine funktionale Abhängigkeit, geeignete a priori abgelegte Kennfelder oder eine Adaption während eines Betriebes des Nutzfahrzeuges für die Ermittlung des zukünftigen Zeitpunktes berücksichtigt sein.

Gemäß einer Weiterbildung des erfindungsgemäßen Verfahrens erfolgt zunächst zu einem ersten Zeitpunkt eine Ermittlung des zukünftigen Zeitpunktes. Zu einem späteren Zeitpunkt erfolgt eine Überprüfung, ob die getroffenen Annahmen für die Ermittlung des zukünftigen Zeitpunktes den Tatsachen entsprochen haben bzw. ob die Steuereinheit die Abhängigkeit der Einflussparameter auf eine Änderung des Niveaus korrekt und umfassend nachgebildet hat. Eine derartige Überprüfung erfolgt dadurch, dass zu einem späteren Zeitpunkt die Steuereinheit ein Kriterium überprüft, welches mit dem Fortschritt der Niveauänderung korreliert. Nach Maßgabe dieser Überprüfung kann dann der zuvor ermittelte zukünftige Zeitpunkt adaptiert werden. Eine derartige Überprüfung und ggf. Adaption des zukünftigen Zeitpunktes kann lediglich einmal oder aber mehrfach erfolgen. Hierdurch kann die Genauigkeit des erfindungsgemäßen Verfahrens und damit die Genauigkeit des Erreichens des Soll-Niveaus erhöht werden. Gleichermaßen kann detektiert werden, wenn die Steuereinheit falsche Annahmen bei einer Ermittelung des zukünftigen Zeitpunktes getroffen hat. Dies kann bei betriebsbedingten Änderungen oder schlimmstenfalls bei Versagen einzelner Bauteile wie beispielsweise Leckagen der Leitungsverbindungen o. ä. vorteilhaft sein.

Vorzugsweise liegt der erste Zeitpunkt vor einer Überführung des Schaltventils in die Öffnungsstellung. Hierdurch kann vor einem Beginn der Anpassung des Niveaus des Nutzfahrzeuges die Zeitdauer für diesen Vorgang ungefähr abgeschätzt werden. Weiterhin kann in Kenntnis dieser Zeitdauer ein geeigneter späterer Zeitpunkt ausgewählt werden. Eine Wahl des ersten Zeitpunktes vor einer Überführung des Schaltventils in die Öffnungsstellung ist vor allem bei schnellen Niveauänderungsvorgängen von Vorteil.

Gemäß einem weiteren erfindungsgemäßen Verfahren wird vor dem Erreichen des zukünftigen Zeitpunktes ein Sollprüfniveau ermittelt, beispielsweise ein Niveau, welches zu einem bestimmten Zeitpunkt während der Niveauänderung erreicht sein soll. Zu diesem Zeitpunkt wird anhand eines Kriteriums überprüft, ob das geänderte Niveau innerhalb eines Toleranzbandes um das Sollprüfniveau liegt. Ist dies der Fall, so ist keine Adaption des zukünftigen Zeitpunktes erforderlich. Anderenfalls ist eine Adaption notwendig. Alternativ oder zusätzlich ist es möglich, eine Veränderung des zukünftigen Zeitpunktes durchzuführen, deren Ausmaß mit der Abweichung des geänderten Niveaus von dem Sollprüfniveau korreliert.

Für ein alternatives erfindungsgemäßes Verfahren führt nach einer Überführung des Schaltventils in die Sperrstellung zum ermittelten zukünftigen Zeitpunkt die Steuereinrichtung einen Vergleich des Niveaus des Nutzfahrzeuges mit dem Soll-Niveau durch. Ein derartiger Vergleich kann unmittelbar zum zukünftigen Zeitpunkt erfolgen oder aber nach einer vorbestimmten Wartezeit, um ein Abklingen etwaiger Schwingungen abzuwarten. Für den Fall, dass der zukünftige Zeitraum nicht exakt genug ermittelt worden ist, ergibt der Vergleich unter Umständen eine unerwünschte Abweichung des Niveaus des Nutzfahrzeuges von dem Soll-Niveau. In diesem Fall wird das Schaltventil erneut in die Öffnungsstellung überführt. Hierbei kann wieder entsprechend dem erfindungsgemäßen Verfahren eine Zeitdauer für die Öffnungsstellung ermittelt werden oder aber ein anderweitiges, an sich bekanntes Regelungsverfahren für das Niveau des Nutzfahrzeuges eingesetzt werden. In diesem Zusammenhang ist es ebenfalls denkbar, dass zunächst mit dem erfindungsgemäßen Verfahren das Niveau angehoben wurde durch Verbindung des Federbalges mit dem Vorratsbehälter, während für die "Nachregelung" nach dem ermittelten zukünftigen Zeitpunkt eine Entlüftung erfolgen kann - umgekehrt kann nach einer Entlüftung auch eine erneute Belüftung erfolgen.

Zusätzlich zu den vorgenannten Einflussparametern können erfindungsgemäß weitere Einflussparameter berücksichtigt werden. Ein möglicher Einflussparameter ist hierbei ein Luftverbrauch eines zusätzlichen, mit dem Vorratsbehälter in pneumatischer Verbindung stehenden Verbrauchers. Ein derartiger Verbraucher kann beispielsweise ein weiterer Luftfederkreis, ein Bremskreis, ein Anhängerkreis oder ein Nebenverbraucherkreis sein.

Ebenfalls berücksichtigt werden kann ein Kuppelvorgang, ein Schaltvorgang, ein Lösen einer Feststellbremse oder eine Bremsbetätigung, welche die pneumatischen Verhältnisse zur Belüftung oder Entlüftung des Federbalges beeinträchtigen.

Weiterhin kann entsprechend der Erfindung als weiterer Einflussparameter ein Betriebszustand des Kompressors berücksichtigt werden, der beispielsweise auf den Vorratsbehälter einwirkt. Hierdurch kann die Veränderung der Druckverhältnisse in dem Vorratsbehälter berücksichtigt werden.

Gemäß einer Weiterbildung des erfindungsgemäßen Verfahrens wird als Einflussgröße auch ein Zustand eines Achsaggregates, insbesondere die Charakteristik des Federbalges, die Charakteristik und ein Betriebszustand eines Federbeines, eines Stabilisators oder eines Wankreglers, berücksichtigt. Beispielsweise zeigt der Federbalg ein nichtlineares Verhalten bei einer Befüllung desselben, welche erfindungsgemäß berücksichtigt ist, beispielsweise mittels eines Kennfeldes oder einer funktionalen Abhängigkeit, die in der Steuereinheit bzw. einer geeigneten Speichereinrichtung abgelegt ist.

Entsprechend einer Weiterbildung der Erfindung steuert die Steuereinheit das Schaltventil bereits vor dem Erreichen des ermittelten zukünftigen Zeitpunktes zur Herbeiführung der Sperrstellung an. Diese Vorverlegung der Ansteuerung kann um die Zeitdauer erfolgen, die als Ansprechzeit für das Schaltventil und vorgestaltete Betätigungseinheiten erforderlich sein. Eine derartige Ansprechzeit kann a priori bekannt sein und in der Steuereinheit berücksichtigt werden.

Weitere Ausgestaltungen des erfindungsgemäßen Verfahrens ergeben sich aus den Unteransprüchen, der Beschreibung und den Zeichnungen.

### KURZBESCHREIBUNG DER FIGUREN

Im Folgenden wird die Erfindung anhand in den Figuren dargestellter bevorzugter Ausführungsbeispiele weiter beschrieben.
- **Fig. 1**: zeigt ein schematisches Blockschaltbild einer erfindungsgemäßen Luftfederungsanlage.
- **Fig. 2a**: zeigt einen zeitlichen Verlauf eines Vorratsdruckes, eines Balgdruckes und des Niveaus während einer Änderung des Niveaus für einen geringen Vorratsdruck.
- **Fig. 2b**: zeigt einen zeitlichen Verlauf einer Schaltstellung eines Schaltventils während einer Änderung des Niveaus gemäß Fig. 2a.
- **Fig. 3a**: zeigt einen zeitlichen Verlauf eines Vorratdruckes, eines Federbalgdruckes und des Niveaus während einer Änderung des Niveaus für einen großen Vorratsdruck.
- **Fig. 3b**: zeigt einen zeitlichen Verlauf einer Schaltstellung eines Schaltventils während einer Änderung des Niveaus gemäß Fig. 3a.
- **Fig. 4a**: zeigt einen zeitlichen Verlauf eines Vorratsdruckes, eines Federbalgdruckes und des Niveaus während einer Änderung des Niveaus mit einer Adaption des vorhergesagten zukünftigen Zeitpunktes.
- **Fig. 4b**: zeigt einen zeitlichen Verlauf einer Schaltstellung eines Schaltventils während einer Änderung des Niveaus gemäß Fig. 4a.
- **Fig. 5a**: zeigt einen zeitlichen Verlauf eines Vorratsdruckes, eines Balgdruckes und des Niveaus während einer Änderung des Niveaus mit einer Überführung des Schaltventils in eine Schließstellung zu dem ermittelten zukünftigen Zeitpunkt und eine hieran anschließende Nachregelung.
- **Fig. 6**: zeigt ein Ablaufdiagramm einer Ausgestaltung eines erfindungsgemäßen Verfahrens.

### FIGURENBESCHREIBUNG

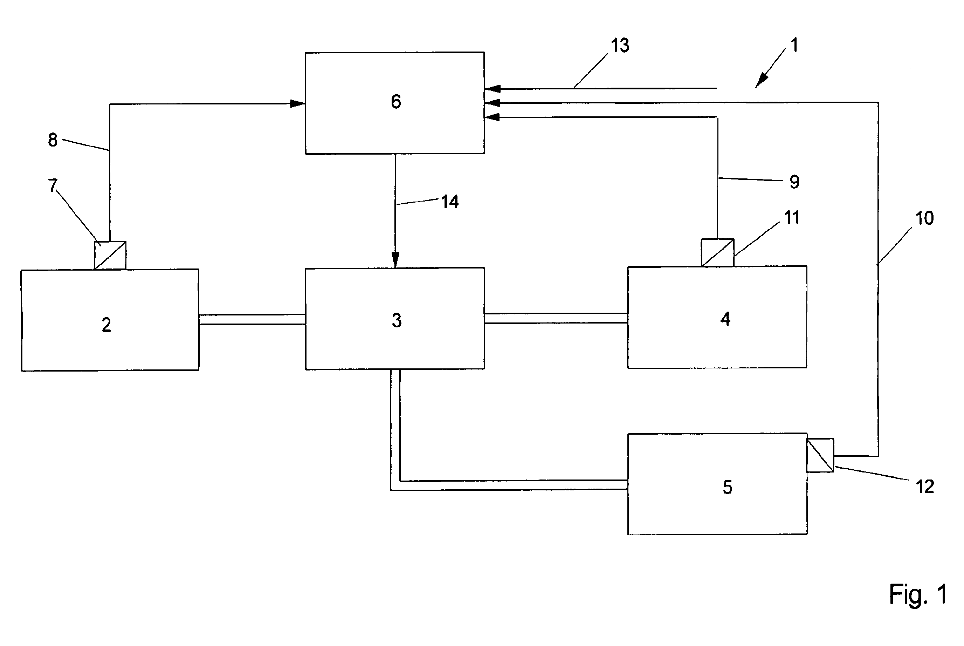

**Fig. 1** zeigt eine Luftfederungsanlage 1, die mindestens einen Federbalg 2 besitzt, der zwischen Räder oder eine Achse eines Nutzfahrzeuges und einen Fahrzeugrahmen zwischengeschaltet ist. Der Federbalg 2 ist über ein Schaltventil 3 zur Veränderung des Druckes in dem Federbalg 2 mit einem pneumatischen Element mit einem zweiten Druckniveau verbindbar, wobei das zweite Druckniveau von dem Druckniveau des Federbalges abweicht. Hierbei kann das zweite Druckniveau von einem Vorratsbehälter 4 bereitgestellt werden, der beispielsweise von einem Kompressor mit Druckluft versorgt wird. Für den Fall des Vorratsbehälters 4 ist das zweite Druckniveau höher als das Druckniveau des Federbalges. Alternativ kann das zweite Druckniveau niedriger als das Druckniveau des Federbalges 2 sein. In diesem Fall wird beispielsweise das zweite Druckniveau von einer Entlüftungseinrichtung 5 bereitgestellt, welche im einfachsten Fall eine Entlüftung in die Umgebung ermöglicht. Über das Schaltventil 3 kann der Federbalg 2 alternativ mit dem Vorratsbehälter 4 oder mit der Entlüftungseinrichtung 5 verbunden werden. Hierzu wird das Schaltventil 3 in geeigneter Weise elektrisch und/oder pneumatisch von einer Steuereinheit 6 angesteuert. Das Schaltventil 3 kann als Ventil in beliebiger Bauart ausgebildet sein oder eine komplexe Baugruppe von mehreren Ventilen oder pneumatischen Elementen gebildet sein, sofern diese eine pneumatische Verbindung des Federbalges 2 mit dem Vorratsbehälter 4 und/oder der Entlüftungseinrichtung 5 ermöglichen. Bei dem Federbalg 2 kann es sich um einen einzelnen Federbalg, mehrere einem Abstützpunkt zugeordnete, hintereinander geschaltete oder parallele Federbälge, mehrere Federbälge einer Achse oder Federbälge mehrere Achsen handeln.

Der Steuereinheit wird ein von einem Drucksensor 7 ermittelter Druckwert zugeführt, welcher mit dem Druck in dem Federbalg 2 korreliert und an die Steuereinheit 6 über die Signalverbindung 8 übertragen wird. Des Weiteren wird der Steuereinheit 6 über eine Signalverbindung 9 und/oder 10 ein Druckwert zugeführt, welcher von einem Drucksensor 11 und/oder 12 erfasst wird und mit dem zweiten Druckniveau korreliert. In entsprechender Weise kann der Steuereinheit 6 ein Wegsignal eines Wegsensors zugeführt werden. Des Weiteren können der Steuereinheit 6 über eine Signalverbindung 13 weitere Parameter, insbesondere Messsignale, Betriebsparameter, Umgebungsparameter oder Anweisungen eines Benutzers des Nutzfahrzeuges, übergeben werden. Hierbei handelt es sich beispielsweise um eine Umgebungstemperatur oder eine Temperatur eines der genannten pneumatischen Bauteile, eine Kenngröße hinsichtlich des dynamischen Fahrzustandes, pneumatische Betriebskenngrößen von pneumatischen Bauelementen, Betriebskenngrößen hinsichtlich Bremskreisen oder Anhänger- oder Nebenverbraucherkreisen, eine Betriebskenngröße oder Drehzahl eines Kompressors, Betriebsgrößen über Schaltstellungen von Ventilen, etwaige Kupplungsvorgänge, eine erfasste Abplattung eines Reifens, manuelle Signale eines Benutzers, Betriebskenngrößen eines Dämpfers, eines Schlupfregelsystems, eines Wankreglers, eines Stabilisators, eine Bewegungsgröße des Nutzfahrzeuges, eine Fahrbahnzustandsgröße, usw.

Aus den über die Signalverbindung 8, 9, 10, 13 übertragenen Signalen steuert die Steuereinheit 6 über eine Steuerleitung 14 das Schaltventil 3 in geeigneter Weise an. Die Steuereinheit 6 besitzt hierzu einen Prozessor, in welchem geeignete Steueralgorithmen abgelegt sind. Weiterhin können in der Steuereinheit funktionale ein- oder mehrdimensionale Abhängigkeiten von den genannten Parametern auf einen Be- und Entlüftungsvorgang des Federbalges 2 abgelegt sein, insbesondere in Form von Funktionen und/oder über entsprechende Kennfelder. Die Funktionen und/oder Kennfelder können a priori vor der ersten Inbetriebnahme in der Steuereinheit und einer geeigneten Speichereinheit der Steuereinheit 6 abgelegt werden und/oder während eines Betriebes angelernt oder adaptiert werden. Über eine nicht dargestellte Verbindung kann die Steuereinheit weiterhin mit weiteren Steuereinheiten zusammenwirken, beispielsweise über einen CAN-Bus.

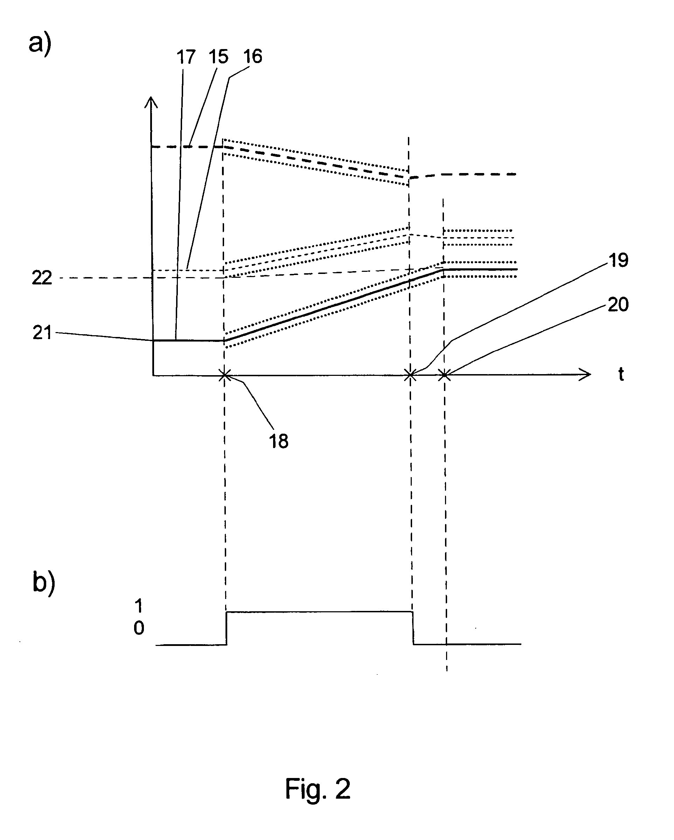

Fig. 2a zeigt einen Verlauf 15 des Druckes im Vorratsbehälter 4 über der Zeit während einer Anhebung des Niveaus durch eine Öffnung des Schaltventils. Verlauf 16 gibt den Verlauf des Druckes in dem Federbalg 2 wieder, während Verlauf 17 den Verlauf des Ist-Niveaus darstellt. In Fig. 2b ist die Schaltstellung des Schaltventils 3 während der Niveauänderung gemäß Fig. 2a dargestellt, wobei der Zustand 0 ein gesperrtes Schaltventil 3 hinsichtlich des Vorratsbehälters 4 sowie der Entlüftungseinrichtung 5 bedeutet und Schaltzustand "1" eine pneumatische Verbindung zwischen dem Federbalg 2 und dem Vorratsbehälter 4 über das Schaltventil 3 kennzeichnet. Zu einem Zeitpunkt 18 wird das Schaltventil 3 von dem Zustand 0 in den Zustand 1 überführt. In Folge der geschaffenen pneumatischen Verbindung zwischen Federbalg 2 und Vorratsbehälter 4 fällt anschließend an den Zeitpunkt 18 der Druck in dem Vorratsbehälter 4 ab, was sich in dem in diesem Bereich abfallenden Kurvenverlauf von Verlauf 15, insbesondere mit konstanter Steigung, widerspiegelt. Der Verlauf 17 des Niveaus steigt in diesem Bereich, insbesondere linear. In Folge der in Richtung des Federbalges 2 bewegten Luftmenge steigt der Druck in dem Federbalg 2 an, was sich in dem ansteigenden Verlauf des Verlaufes 16, insbesondere dem konstanten Anstieg, widerspiegelt.

Vor und/oder nach dem Zeitpunkt 18 wird ein zukünftiger Zeitpunkt 19 ermittelt, zu dem das Schaltventil 3 von der Öffnungsstellung "1" in die Schließstellung "0" überführt wird durch die Steuereinheit 6. Bis zu einem Zeitpunkt 20 ist nach dem zukünftigen Zeitpunkt 19 eine Beruhigungsphase in Fig. 2 zu erkennen, innerhalb welcher beispielsweise eine Totzeit des Schaltventils 3 liegen kann oder pneumatische Schwingungen in den pneumatischen Elementen oder weitere Schwingungen des Nutzfahrzeuges abklingen können. Zum Zeitpunkt 20 ist das Nutzfahrzeug von dem Ist-Niveau 21 vor dem Zeitpunkt 18 auf das Soll-Niveau 22 gebracht.

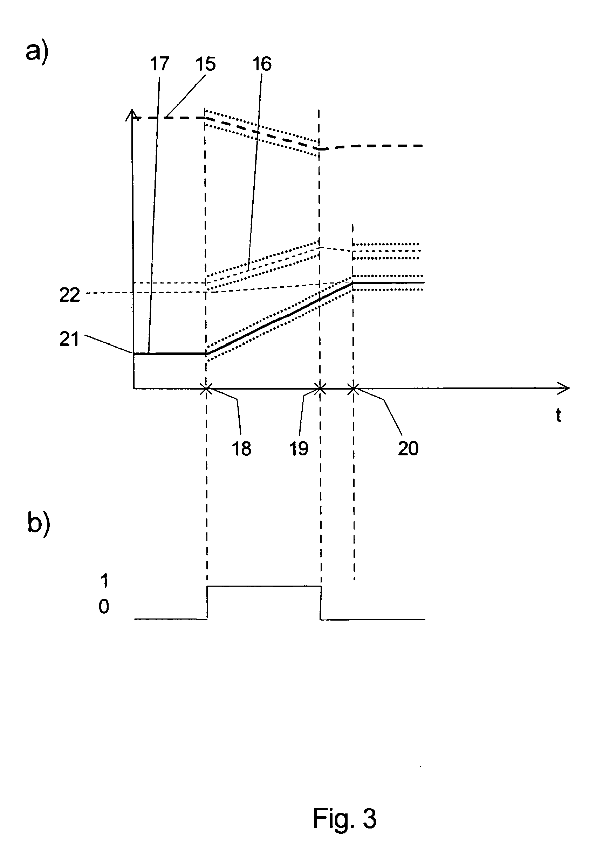

Fig. 3a zeigt vergleichbare Zeitverläufe, allerdings für den Fall, dass zwischen dem Druckniveau des Federbalges 2 und dem zweiten Druckniveau, insbesondere dem Druckniveau des Vorratsbehälters, eine größere Druckdifferenz gegeben ist und/oder der Beladungszustand des Nutzfahrzeuges geringer ist. Dieses äußert sich daran, dass der zukünftige Zeitpunkt 19 dichter an dem Zeitpunkt 18 liegt, so dass das Schaltventil 3 eine kürzere Zeitdauer geöffnet sein muss. Weiterhin ist aus Fig. 3a ersichtlich, dass für das geöffnete Schaltventil 3 die Verläufe 15, 16 und 17 steiler sind. Dieses bedeutet einerseits, dass es für derartige Bedingungen von großem Vorteil ist, rechtzeitig den zukünftigen Zeitpunkt 19 zu kennen. Andererseits ist eine Folge der vergrößerten Steigungen, dass sich Fehler bei dem zukünftigen Zeitpunkt 19 in größerem Ausmaß auf den Fehler des Niveaus des Nutzfahrzeuges gegenüber dem beabsichtigten Soll-Niveau auswirken, wodurch einer exakten Berücksichtigung der Einflussfaktoren auf eine Niveauänderung vergrößerte Bedeutung zukommt.

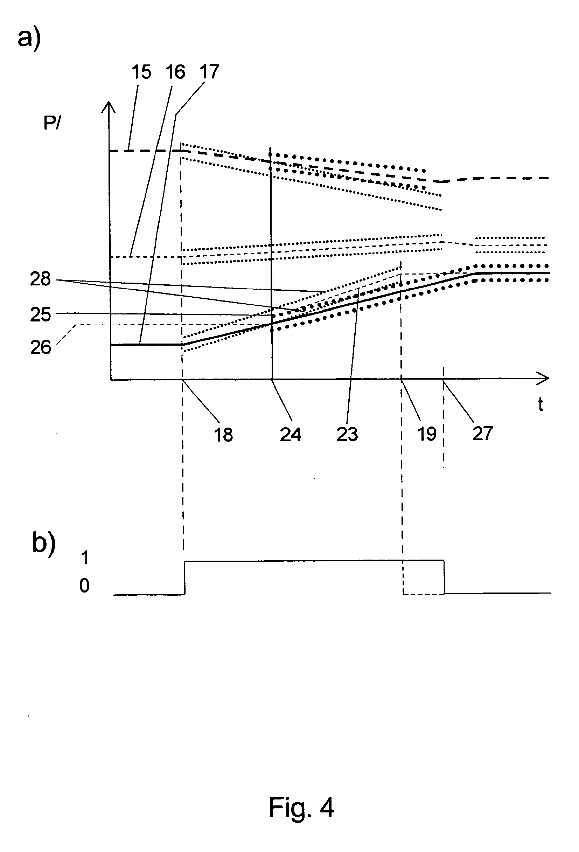

Die in den **Fig. 4** **a und b** dargestellten Verläufe 15 bis 17 betreffen eine Ermittlung eines zukünftigen Zeitpunkts 19 durch die Steuereinheit 6 vor oder (geringfügig) nach dem Zeitpunkt 18. Hierbei gibt ein Verlauf 23 einen von der Steuereinheit abgeschätzten zukünftigen Verlauf des Niveaus wieder. Zu einem Zeitpunkt 24, welcher zwischen den Zeitpunkten 18 und 19 liegt, erfolgt eine Überprüfung, ob eine Berücksichtigung der einschlägigen Einflussparameter in der Steuereinheit 6 den physikalischen Gegebenheiten entsprochen hat. Für einen Kontrollzeitpunkt 24 sagt die Steuereinheit 6 einen Kontrollwert 25 des Verlaufs 23 vorher, welcher mit einem tatsächlich vorliegenden Wert 26 des Verlaufs 17 verglichen wird. Nach Maßgabe dieses Vergleiches erfolgt eine Anpassung des abgeschätzten Verlaufs 23, infolgedessen der vorbestimmte zukünftige Zeitpunkt 19 auf den vorbestimmten zukünftigen Zeitpunkt 27 adaptiert wird. Hierbei kann die Änderung der Steigung des angenommenen Verlaufs 17 mit dem Ergebnis des Vergleichs der Werte 25, 26 korrelieren oder das Ausmaß der Verschiebung des zukünftigen Zeitpunkts 19 auf den zukünftigen Zeitpunkt 27. Ebenfalls denkbar ist, dass in der Steuereinrichtung ein Toleranzfenster 28 um den angenommenen Verlauf 23 gelegt wird und für den Fall, dass der tatsächliche Verlauf 17 des Niveaus außerhalb des Toleranzfensters 28 liegt, eine Adaption des angenommenen Verlaufes 23 erfolgt. Entsprechende Auswertungen und Toleranzfenster können, wie in Fig. 4 dargestellt, ebenfalls in der Steuereinheit 6 für den Verlauf 16 und den Verlauf 15 ermittelt und analysiert werden.

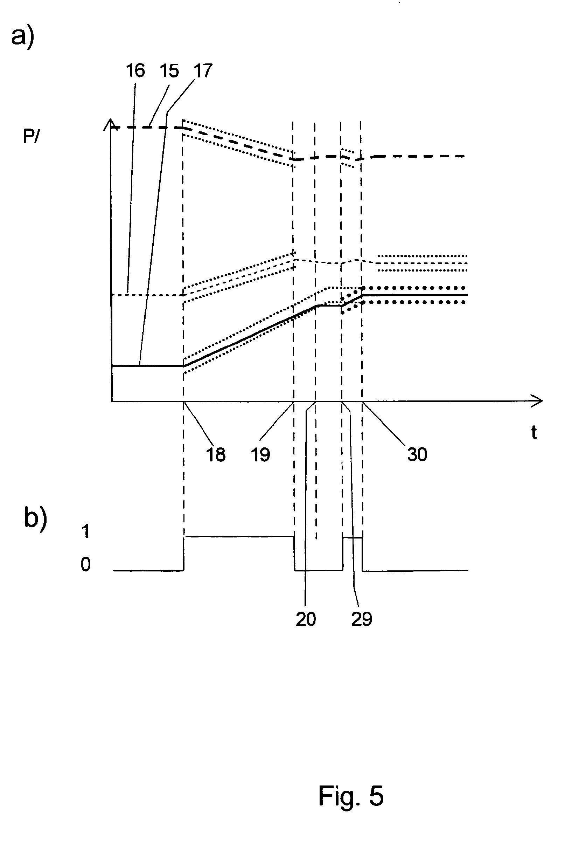

Für eine alternative Ausgestaltung gemäß **Fig. 5** kann auf eine Adaption während der Zeitspanne zwischen den Zeitpunkten 18 und 19 verzichtet werden. In diesem Fall erfolgt vielmehr nach Ablauf des Zeitpunkts 19 und einer Überführung des Schaltventils 3 in die Sperrstellung eine Kontrolle, ob der Verlauf 17 das Soll-Niveau tatsächlich erreicht hat. Jetzt können beliebige Kriterien ausgewertet werden, beispielsweise ein absoluter Vergleich des Ist-Werts mit dem Soll-Wert oder der Vergleich der Differenz mit einem Toleranzfenster. Ist das Soll-Niveau nicht mit einer hinreichenden Genauigkeit erreicht, so wird zu einem Zeitpunkt 29 entsprechend dem Zeitpunkt 18 das Schaltventil 3 wieder in die Öffnungsstellung verbracht und entsprechend dem Vorgehen zum Zeitpunkt 18, aber unter Umständen mit einem wesentlich verringerten Sollwert der Änderung des Niveaus das Verfahren wiederholt und ein neuer zukünftiger Zeitpunkt 30 bestimmt, zu dem das Schaltventil 3 wieder in die Sperrstellung gebracht wird. Abweichend zu dem in Fig. 5 dargestellten Ausführungsbeispiel kann anschließend an den zukünftigen Zeitpunkt 19 ein beliebiges Steuerungs- oder Regelungsverfahren für eine Änderung des Niveaus zum Einsatz kommen.

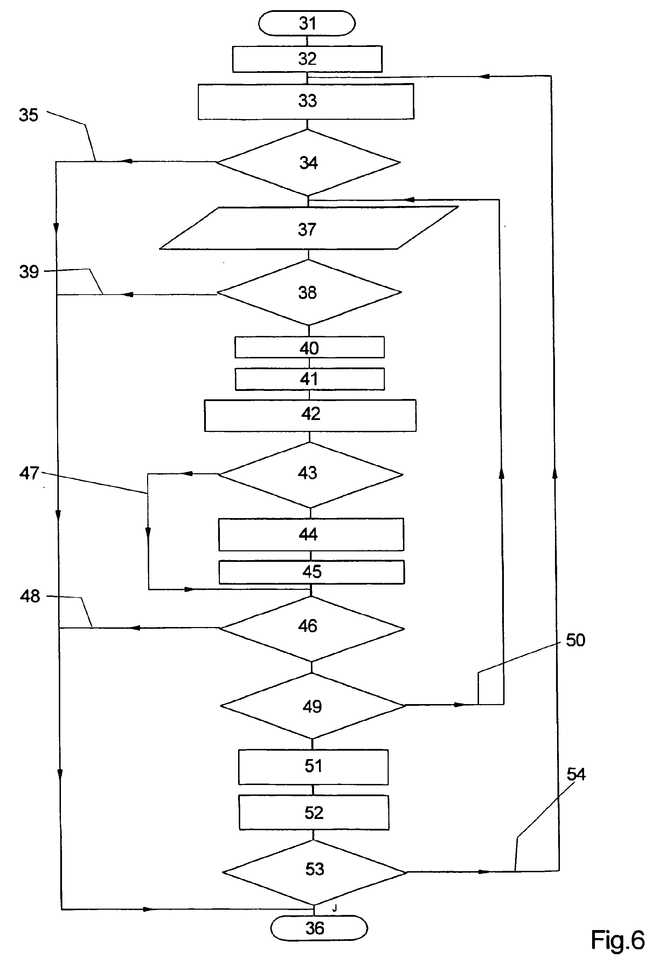

In dem in **Fig. 6** dargestellten schematischen Blockschaltbild, welches in dieser Form in einem Algorithmus in der Steuereinheit 6 abgelegt sein kann, beschreibt Block 31 den Start des Verfahrens. Ein derartiger Start kann beispielsweise automatisch, manuell oder bei Einschalten der Zündung erfolgen. Zunächst sind gemäß Block 32 die Ist-Werte zu messen und der Steuereinheit zuzuführen, beispielsweise über den Drucksensor 7 und die Signalverbindungen 8, 9, 10, 13. Anschließend können in dem Block 33 Anforderungen einer Bedieneinheit, beispielsweise einer manuellen Bedieneinheit des Fahrers oder von anderen Steuergeräten, eingelesen werden. In Entscheidungsblock 34 ermittelt die Steuereinheit 6 unter Berücksichtigung der Ist-Werte gemäß Block 32 sowie der eingelesenen Anforderungen gemäß Block 33, ob eine Anforderung nach einer Änderung des Niveaus vorhanden ist und ggf., welchen Soll-Wert die Änderung des Niveaus hat. Ist keine derartige Anforderung vorhanden, so verzweigt der Algorithmus über den Ausstiegszweig 35 zu einem Ende 36. Ist jedoch eine Anforderung vorhanden, so wird in der Steuereinheit 6 mindestens ein Kurvenverlauf wie der Verlauf 15 des Vorratsdrucks, der Verlauf 16 des Drucks im Federbalg und/oder ein Verlauf 17 des Niveaus errechnet. Im Block 37 erfolgt eine Plausibilitätsprüfung dahingehend, ob die ermittelten Verläufe 15 bis 17 innerhalb zulässiger Bereiche liegen. Reicht beispielsweise eine Druckdifferenz zur Erzielung der gewünschten Veränderung des Niveaus des Nutzfahrzeuges nicht aus, kann in Block 37 festgestellt werden, dass die Niveauänderung nicht durchführbar ist. In diesem Fall kann das Verfahren ebenfalls über einen Ausstiegszweig 39 verlassen werden. Es kann beispielsweise eine Fehlermeldung erzeugt werden und/oder über geeignete Maßnahmen ein Druckniveau beispielsweise in einem Vorratsbehälter, vgl. auch DE 101 60 972 C1, geändert werden. Weiterhin kann in dem Block 37 auch ein zukünftiger Zeitpunkt 19 ermittelt werden. Ergibt die Prüfung im Entscheidungsblock 38, dass die Verläufe 15 bis 17 im zulässigen Bereich liegen, wird im Block 40 das Schaltventil 3 in die Öffnungsstellung gebracht. Dies erfolgt zum Zeitpunkt 18. Zu einem Zeitpunkt 24 wird gemäß Fig. 4 in Block 41 ein Ist-Wert 26 des Verlaufs 17 gemessen, der in Block 42 mit den berechneten Kurvenverläufen, insbesondere dem Kontrollwert 25, verglichen wird. Hieran anschließend wird im Entscheidungsblock 43 überprüft, ob der Vergleich gemäß Block 42 zu einer nicht tolerierbaren Abweichung der Werte 25, 26 geführt hat. Ist dieses der Fall, so hat eine Adaption der vorbestimmten Kurvenverläufe durch die Steuereinheit 6 zu erfolgen. Ebenfalls muss der zukünftige Zeitpunkt von Zeitpunkt 19 auf Zeitpunkt 27 adaptiert werden. Während in dem Block 44 eine Korrektur der Kurvenverläufe erfolgt, indem beispielsweise neue Parameter für den Kurvenverlauf bestimmt werden, werden in Block 45 die vorbestimmten Vorläufe selbst ermittelt und angepasst. Für die derart angepassten Kurvenverläufe wird im Entscheidungsblock 46 überprüft, ob die Kurvenverläufe innerhalb zulässiger Bereiche liegen. In dem Fall, dass im Entscheidungsblock 43 keine nicht tolerierbare Abweichung festgestellt wurde, wird vom Entscheidungsblock 43 unmittelbar in den Entscheidungsblock 46 verzweigt über den Bypass 47. Ergibt die Prüfung im Entscheidungsblock 46, dass die Kurvenverläufe nicht innerhalb zulässiger Parameter oder Bereich liegen, so verzweigt das Verfahren über den Ausstiegszweig 48 an das Ende 36. Anderenfalls wird im Entscheidungsblock 49 überprüft, ob der vorbestimmte zukünftige Zeitpunkt 19 bzw. 27 erreicht ist. Ist dieses nicht der Fall, kann über den Abzweig wieder zu dem Block 37 zurückgesprungen werden, so dass eine erneute Berechnung der Kurvenverläufe erfolgt. Ist hingegen der Zeitpunkt 19 bzw. 27 erreicht, so wird das Schaltventil 3 mit dem Block 51 in seine Sperrstellung gebracht. Anschließend wird in dem Block 52 eine Beruhigungszeit abgewartet. Im Entscheidungsblock 53 kann eine erneute Überprüfung dahingehend erfolgen, ob das Niveau am Ende der Beruhigungszeit dem Soll-Niveau entspricht. Ist dieses nicht der Fall, kann über den Abzweig 54 wieder vor den Block 33 zurückgesprungen werden, so dass gemäß Fig. 5 das Verfahren von neuem beginnt, jetzt allerdings mit einer verringerten gewünschten Veränderung des Soll-Werts der Änderung des Niveaus. Anderenfalls ist erfolgreich das Ende 36 des Verfahrens erreicht.

In der Steuereinheit 6 können vielfältige Einflussfaktoren für die Verläufe 15 bis 17 berücksichtigt werden.
a) Einflussfaktoren des Vorratsbehälters 4 sowie eines Luftverbrauchs
   Berücksichtigt werden kann in der Steuereinheit ein gegebenes Volumen des Vorratsbehälters, welches Aufschluss über die Schnelligkeit eines Druckabfalls geben kann. Weiterhin kann eine Leitungsvolumen der gesamten Luftfederungsanlage 1 oder von Teilen derselben Berücksichtigung finden. Zusätzlich oder alternativ kann ein Leitungsvolumen eines Bremskreises, eines Anhängerkreises oder eines Nebenverbraucherkreises Berücksichtigung finden, wenn diese ebenfalls an den Vorratsbehälter 4 angeschlossen sind. Ebenfalls ist es möglich, dass eine Berücksichtigung einer Druckhöhe eines Luftfederkreises, eines Bremskreises, eines Anhängerverbraucherkreises oder eines Nebenverbraucherkreises Berücksichtigung findet. Ebenfalls einschlägig ist eine Nachförderung eines Kompressors in dem Vorratsbehälter, wobei hier unter einem Betriebszustand des Kompressors sowohl die Tätigkeit des Kompressors überhaupt als auch eine Drehzahl des Kompressors und eine Förderleistung desselben beinhalten kann. Ebenfalls möglich ist eine Berücksichtigung einer Nachförderung aus anderen Druckluftkreisen (Bremse, Anhängerverbraucherkreis, Nebenverbraucherkreis) unter Einbeziehung etwaiger Ventilverluste. Einen wichtigen Einfluss hat auch die Umgebungstemperatur bzw. eine Temperatur der Federbälge 2 und/oder der Luft in der Luftfederungsanlage 1, vgl. auch DE 101 60 972 C1. Weiteren Einfluss kann ein Luftverbrauch von angeschlossenen Ventilen oder Verbrauchern ausüben, insbesondere eine Änderung einer Schaltstellung eines Ventils wie beispielsweise bei einem Kuppelvorgang, einem Schaltvorgang, einem Lösen einer Feststellbremse, einer Bremsbetätigung und ähnlichem.
b) Einflussfaktoren Federbalg
   Hinsichtlich des Federbalges 2 kann eine Balgcharakteristik berücksichtigt sein, welche beispielsweise in der Steuereinheit 6 abgelegt ist. Diese kann insbesondere von dem wirksamen Durchmesser abhängen, welcher wiederum eine nichtlineare Abhängigkeit von dem Druck in dem Federbalg 2 zeigt. Ebenfalls kann eine lineare oder nichtlineare Abhängigkeit von einer Hubposition des Balgs bestehen. Ein Fehlereinfluss kann sich ergeben, wenn sich beispielsweise durch einen Beladungszustand eine Abplattung der Reifen ergibt, welche zu einer Änderung des Niveaus führen kann, die von etwaigen Wegsensoren nicht erfasst wird, die zwischen der Achse und dem Fahrzeugrahmen Signale aufnehmen. Daher ist eine Berücksichtigung einer Abplattung eines Reifens in der Steuereinheit 6 in einem derartigen Fall ratsam, welche beispielsweise in Abhängigkeit von dem Beladungszustand in der Steuereinheit 6 abgelegt sein kann.
c) Einflussverhalten des Achsaggregates
   Hier kann die Tätigkeit sowie die mechanischen Eigenschaften eines Stoßdämpfers, eines Wankreglers, eines Stabilisators sowie die Temperatur des Achsaggregates eine Rolle spielen.
d) Einflussverhalten einer Leitung und der Ventile, insbesondere der pneumatischen Bauelemente des Schaltventils 3
   Hier findet insbesondere eine Berücksichtigung der Ansprechzeit des Schaltventils 3 bzw. von Bauelementen desselben statt. Weitere Einflussgröße ist eine wirksame Leitungslänge und eine Leitungscharakteristik wie beispielsweise eine Drosselwirkung. Ebenfalls die Temperatur kann einen Einfluss auf die Verläufe 15 bis 17 nehmen.
e) Einflussverhalten des Fahrzustands des Fahrzeugs
   Hier ist es für eine Erhöhung der Genauigkeit der Herbeiführung der gewünschten Niveauänderung von Vorteil, etwaige Bewegungsgrößen des Kraftfahrzeugs wie beispielsweise Geschwindigkeitsänderungen zu berücksichtigen, die zu einem Knicken oder einem Aufbäumen des Fahrzeugs oder einem seitlichen Wanken, beispielsweise bei Kurvenfahrt führen können. Weitere entscheidende Einflussgröße ist ein Fahrbahnzustand, welcher dynamisch die Luft und die Federbälge 2 beaufschlagen kann. Weitere Einflussgrößen sind ein Zustand einer Betriebsbremse, einer Handbremse, einer Federspeicherbremse, wenn diese mit der Luftfederungsanlage in pneumatischer Wechselwirkung stehen oder über diese Zustände eine Geschwindigkeitsänderung indiziert wird, die Einfluss auf die Luftfederungsanlage 1 nimmt.

Für das erfindungsgemäße Verfahren zur Durchführung einer Niveauänderung ist zunächst der Ist-Zustand des Nutzfahrzeuges zu ermitteln, vgl. Block 32. Hier wird beispielsweise der Druck in dem Vorratsbehälter 4 oder einer zugeordneten Leitung unter Berücksichtigung der Leitungsverluste ermittelt. Weiterhin kann es von Vorteil sein, das Ist-Niveau des Fahrzeugs, gemessen von Rahmen zu Achse, festzustellen. Wenn vorhanden, sollten Betriebswerte eines Wankreglers, wie beispielsweise eine Stoßdämpferhärte, ermittelt werden. Weiterhin kann es vorkommen, dass bei einer betätigten Bremse eine Verspannung der Achsaggregate erfolgt, die beispielsweise zu einer veränderten Druckbeaufschlagung der Federbälge führt. Weitere Informationen über den Beladungszustand sowie den Schwerpunktabstand der Lasten bzw. eine Verteilung der Last auf die einzelnen Achsen des Nutzfahrzeuges sind ebenfalls hilfreich.

Wie zuvor dargelegt muss weiterhin das Soll-Niveau festgelegt werden, welches beispielsweise entsprechend Block 33 und 34 ermittelt wird. Besonders zu berücksichtigen ist unter Umständen eine Änderung des Ladezustands bzw. eines Schwerpunktsabstands, beispielsweise eine Änderung der Aufteilung der Last auf die einzelnen Achsen des Nutzfahrzeuges wie beispielsweise für ein Tankfahrzeug, wenn sich in Folge der Niveauänderung eine veränderte Neigung des Tanks ergibt.

Für eine Ermittlung der Hebecharakteristik, also eine Vorhersage der Verläufe 15 bis 17, ist es vorteilhaft, wenn eine Berechnung der Volumenverschiebung in die jeweiligen Luftfederkreise erfolgt. Gleichzeitig könnte eine Berechnung des zeitlichen Hubverlaufs erfolgen. Zusätzlich kann auch eine Berechnung des Druckverlaufs im Vorratsbehälter 4 der Luftfederungsanlage 1 unter Einbeziehung der Leitungs- und Ventilcharakteristik und des Fahrzustands des Fahrzeugs erfolgen. Eine Erfassung des Niveaus kann anstelle eines Wegsensors über einen Winkelsensor erfolgen.

### BEZUGSZEICHENLISTE

- 1: Luftfederungsanlage
- 2: Federbalg
- 3: Schaltventil
- 4: Vorratsbehälter
- 5: Entlüftungseinrichtung
- 6: Steuereinheit
- 7: Drucksensor
- 8: Signalverbindung
- 9: Signalverbindung
- 10: Signalverbindung

- 11: Drucksensor
- 12: Drucksensor
- 13: Signalverbindung
- 14: Steuerleitung
- 15: Verlauf Vorratsdruck
- 16: Verlauf Druckfederbalg
- 17: Niveau
- 18: Zeitpunkt
- 19: zukünftiger Zeitpunkt
- 20: Zeitpunkt

- 21: Ist-Niveau
- 22: Soll-Niveau
- 23: Verlauf
- 24: Kontrollzeitpunkt
- 25: Kontrollwert
- 26: Wert
- 27: zukünftiger Zeitpunkt
- 28: Toleranzfenster
- 29: Zeitpunkt
- 30: zukünftiger Zeitpunkt

- 31: Block
- 32: Block
- 33: Block
- 34: Block
- 35: Ausstiegszweig
- 36: Ende
- 37: Block
- 38: Entscheidungsblock
- 39: Ausstiegszweig
- 40: Block

- 41: Block
- 42: Block
- 43: Entscheidungsblock
- 44: Block
- 45: Block
- 46: Entscheidungsblock
- 47: Bypass
- 48: Ausstiegszweig
- 49: Entscheidungsblock
- 50: Abzweig

- 51: Block
- 52: Block
- 53: Entscheidungsblock
- 54: Abzweig

## Patentansprüche

1. Verfahren zur Veränderung eines Niveaus eines Nutzfahrzeuges mit Luftfederungsanlage von einem Ist-Niveau (21) auf ein Soll-Niveau (22), bei dem ein Druckniveau eines Federbalges (2) **dadurch** verändert wird, dass der Federbalg (2) über ein Schaltventil (3) in Öffnungsstellung mit einem zweiten Druckniveau verbunden wird, welches von dem Druckniveau des Federbalges (2) abweicht, **dadurch gekennzeichnet, dass** in einer Steuereinheit (6) mit
- einem Sollwert der Änderung des Niveaus,
- einem mit dem Beladungszustand des Nutzfahrzeuges korrelierenden Ladungswert und
- einem mit dem zweiten Druckniveau korrelierenden Druckwert ein zukünftiger Zeitpunkt (19) ermittelt wird, zu dem voraussichtlich das Schaltventil (3) in eine Sperrstellung zu überführen ist.

2. Verfahren nach Anspruch 1, **dadurch gekennzeichnet, dass** zu einem ersten Zeitpunkt eine Ermittlung des zukünftigen Zeitpunktes (19) erfolgt und zu einem späteren Zeitpunkt die Steuereinheit (6) ein Kriterium hinsichtlich eines Fortschrittes der Niveauänderung überprüft und nach Maßgabe der Überprüfung den zuvor ermittelten zukünftigen Zeitpunkt (19) adaptiert (zukünftiger Zeitpunkt 27).

3. Verfahren nach Anspruch 2, **dadurch gekennzeichnet, dass** der erste Zeitpunkt vor einer Überführung des Schaltventils in die Öffnungsstellung (Zeitpunkt 18) liegt und der spätere Zeitpunkt nach der Überführung des Schaltventils in die Öffnungsstellung (Zeitpunkt 18) liegt.

4. Verfahren nach einem der Ansprüche 1 bis 3, **dadurch gekennzeichnet, dass** vor dem Erreichen des zukünftigen Zeitpunkts (19) ein Sollprüfniveau (Wert 25) ermittelt wird und als Kriterium überprüft wird, ob ein geändertes Niveau (Wert 26) innerhalb eines Toleranzbands um das Sollprüfniveau (Wert 25) liegt.

5. Verfahren nach einem der Ansprüche 1 bis 4, **dadurch gekennzeichnet, dass**
- das Schaltventil (3) zu dem ermittelten zukünftigen Zeitpunkt (19) in die Sperrstellung überführt wird,
- anschließend die Steuereinheit (6) einen Vergleich des Niveaus des Nutzfahrzeugs mit dem Soll-Niveau (22) durchführt und
- für Abweichungen des Niveaus vom Soll-Niveau (22) das Schaltventil (3) erneut in die Öffnungsstellung überführt wird.

6. Verfahren nach einem der vorhergehenden Ansprüche, **dadurch gekennzeichnet, dass** zur Ermittlung des zukünftigen Zeitpunkts (19) von der Steuereinrichtung auch ein Luftverbrauch eines zusätzlichen, mit dem Vorratsbehälter (4) in pneumatischer Verbindung stehenden Verbrauchers berücksichtigt wird.

7. Verfahren nach einem der vorhergehenden Ansprüche, **dadurch gekennzeichnet, dass** zur Ermittlung des zukünftigen Zeitpunkts (19) von der Steuereinrichtung auch pneumatische Kenngrößen der pneumatischen Einheiten zwischen Vorratsbehälter (4) und Federbalg (2) oder paralleler Leitungen oder Verbraucher berücksichtigt werden.

8. Verfahren nach einem der vorhergehenden Ansprüche, **dadurch gekennzeichnet, dass** zur Ermittlung des zukünftigen Zeitpunkts (19) von der Steuereinrichtung auch ein Betriebszustand eines Kompressors berücksichtigt wird.

9. Verfahren nach einem der vorhergehenden Ansprüche, **dadurch gekennzeichnet, dass** zur Ermittlung des zukünftigen Zeitpunkts (19) von der Steuereinheit (6) auch eine Temperatur berücksichtigt wird.

10. Verfahren nach einem der vorhergehenden Ansprüche, **dadurch gekennzeichnet, dass** zur Ermittlung des zukünftigen Zeitpunkts von der Steuereinheit (6) auch ein Zustand eines Achsaggregats, insbesondere die Charakteristik des Federbalgs, die Charakteristik und ein Betriebszustand eines Federbeins, eines Stabilisators oder eines Wankreglers, berücksichtigt wird.

11. Verfahren nach einem der vorhergehenden Ansprüche, **dadurch gekennzeichnet, dass** zur Ermittlung des zukünftigen Zeitpunkts (19) von der Steuereinheit (6) auch ein Fahrzustand des Kraftfahrzeugs berücksichtigt wird.

12. Verfahren nach einem der vorhergehenden Ansprüche, **dadurch gekennzeichnet, dass** die Steuereinheit (6) um eine a priori bekannte Ansprechzeit des Schaltventils (3) vor dem Erreichen des ermittelten zukünftigen Zeitpunkts (19) das Schaltventil (3) zur Herbeiführung der Sperrstellung ansteuert.

## Claims

1. Method for changing the level of a vehicle comprising an air suspension system from an actual level (21) to a desired level (22) including changing a pressure level of an air suspension bellow (2) by connecting the air suspension bellow (2) via a switching valve (3) in an open state with a second pressure level or reservoir having a pressure differing from the pressure level of the air suspension bellow (2), **characterised by** determining an estimated future point in time (19) for transferring the switching valve (3) into a shut-off state in a control unit (6) under consideration of
- a desired value of the change of the level,
- a load value correlating with the loading state of the vehicle, and
- a pressure value correlating with the second pressure level.

2. Method according to claim 1, wherein at a first point in time the estimated future point in time (19) is determined and at a later point In time the control unit (6) checks a criterion for the progress of the change of the level and dependent on the result of the check adapts the former determined future point in time (19) (future point in time 27).

3. Method according to claim 2, wherein the first point in time anticipates the transfer of the switching valve into the open state (point in time 18) and the later point in time is after the transfer of the switching valve into the open state (point in time 18).

4. Method according to one of claims 1 to 3, wherein before the future point in time (19) a desired level (value 25) is determined and a criterion is built by checking if a changed level (value 26) lies within a tolerance band around the desired check level (value 25).

5. Method according to one of claims 1 to 4, wherein
- the switching valve (3) Is transferred at the determined future point in time (19) in the shut-off state,
- subsequently the control unit (6) compares the level of the vehicle with the desired level (22), and
- for deviations of the level from the desired level (22) the switching valve (3) Is again transferred into the open state.

6. Method according to one of claims 1 to 5, wherein for determining the future point in time (19) the control device also considers an air consumption of an additional consumer being pneumatically connected with the reservoir (4).

7. Method according to one of claims 1 to 6, wherein for determining the future point In time (19) the control device also considers pneumatic characteristic measures or parameters of the pneumatic units located between the reservoir (4) and the air suspension bellow (2) or of parallel conduits or consumers.

8. Method according to one of claims 1 to 7, wherein for determining the future point In time (19) the control device also considers the operating state of a compressor.

9. Method according to one of claims 1 to 8, wherein for determining the future point in time (19) the control device or unit (6) also considers a temperature.

10. Method according to one of claims 1 to 9, wherein for determining the future point in time the control device or unit (6) also considers a state of an aggregate of an axle, in particular the characteristic of an air suspension bellow, the characteristic and the operating state of a suspension strut, of a stabilizer or an anti rolling control device.

11. Method according to one of claims 1 to 10, wherein for determining the future point in time (19) the control device or unit (6) also considers a driving state of the vehicle.

12. Method according to one of claims 1 to 11, wherein the control unit (6) controls the switching valve (3) for achieving the shut-off state with an a priori known reaction time interval of the switching valve (3) prior to the determined future point in time (19).

## Revendications

1. Procédé pour modifier le niveau d'un véhicule utilitaire avec une suspension pneumatique, à partir d'un niveau réel (21) vers un niveau théorique (22), dans lequel un niveau de pression d'un coussin d'air pneumatique (2) peut être modifié par le fait que le coussin d'air pneumatique (2) est relié, par l'intermédiaire d'une vanne de commande (3) dans la position d'ouverture, à un deuxième niveau de pression qui diffère du niveau de pression du coussin d'air pneumatique (2), **caractérisé en ce qu'**un moment futur (19), auquel il est prévu que la vanne de commande (3) soit amenée dans une position de fermeture, est déterminé dans une unité de commande (6) avec
- une valeur de consigne de la variation du niveau,
- une valeur de charge en corrélation avec l'état de charge du véhicule utilitaire, et
- une valeur de pression en corrélation avec le deuxième niveau de pression.

2. Procédé selon la revendication 1, **caractérisé en ce qu'**à un premier moment est déterminé le moment futur (19), et à un moment ultérieur l'unité de commande (6) examine un critère relatif à un avancement de la variation du niveau et, en fonction de l'examen, adapte (moment futur 27) le moment futur (19) déterminé antérieurement.

3. Procédé selon la revendication 2, **caractérisé en ce que** le premier moment se situe avant la transposition de la vanne de commande dans la position d'ouverture (moment 18) et le moment ultérieur se situe après la transposition de la vanne de commande dans la position d'ouverture (moment 18).

4. Procédé selon l'une quelconque des revendications 1 à 3, **caractérisé en ce que**, avant que soit atteint le moment futur (19), un niveau d'essai théorique (valeur 25) est déterminé et, en tant que critère, il est examine si un niveau modifié (valeur 26) se situe à l'intérieur d'une bande de tolérances autour du niveau d'essai théorique (valeur 25).

5. Procédé selon l'une quelconque des revendications 1 à 4, **caractérisé en ce que**
- au moment futur (19) déterminé, la vanne de commande (3) est amenée dans la position de fermeture,
- ensuite, l'unité de commande (6) compare le niveau du véhicule utilitaire avec le niveau théorique (22), et
- si le niveau s'écarte du niveau théorique (22), la vanne de commande (3) est amenée à nouveau dans la position d'ouverture.

6. Procédé selon l'une quelconque des revendications précédentes, **caractérisé en ce que** pour déterminer le moment futur (19), l'unité de commande tient également compte d'une consommation d'air d'un consommateur supplémentaire, relié par voie pneumatique au réservoir de stockage (4).

7. Procédé selon l'une quelconque des revendications précédentes, **caractérisé en ce que** pour déterminer le moment futur (19), l'unité de commande tient également compte de paramètres pneumatiques des unités pneumatiques entre le réservoir de stockage (4) et le coussin d'air pneumatique (2) ou des conduites parallèles ou des consommateurs.

8. Procédé selon l'une quelconque des revendications précédentes, **caractérisé en ce que** pour déterminer le moment futur (19), l'unité de commande tient également compte d'un état de fonctionnement d'un compresseur.

9. Procédé selon l'une quelconque des revendications précédentes, **caractérisé en ce que** pour déterminer le moment futur (19), l'unité de commande (6) tient également compte d'une température.

10. Procédé de préférence selon l'une quelconque des revendications précédentes, **caractérisé en ce que** pour déterminer le moment futur, l'unité de commande (6) tient également compte d'un état d'une unité d'essieux, en particulier la caractéristique du coussin d'air pneumatique, la caractéristique et un état de fonctionnement d'une jambe de force, d'un stabilisateur ou d'un régulateur de roulis.

11. Procédé selon l'une quelconque des revendications précédentes, **caractérisé en ce que** pour déterminer le moment futur (19), l'unité de commande (6) tient également compte d'un état de conduite du véhicule automobile.

12. Procédé selon l'une quelconque des revendications précédentes, **caractérisé en ce que** l'unité de commande (6), dans un temps de réponse, connu à priori, de la vanne de commande (3) avant que le moment futur (19) soit atteint, active la vanne de commande (3) pour l'amener dans la position de fermeture.
